(19) Europäisches Patentamt
European Patent Office
Office européen des brevets

(11) **EP 1 612 004 B1**

(12) **EUROPÄISCHE PATENTSCHRIFT**

(45) Veröffentlichungstag und Bekanntmachung des Hinweises auf die Patenterteilung:
**07.05.2014 Patentblatt 2014/19**

(51) Int Cl.:
**B25J 9/16** *(2006.01)*

(21) Anmeldenummer: **05013741.3**

(22) Anmeldetag: **25.06.2005**

(54) **Verfahren und Vorrichtung zum Steuern des Handhabungsgeräts**

Method and device for controlling a manipulator

Procédé et dispositif de commande d' un manipulateur

(84) Benannte Vertragsstaaten:
**DE FR IT SE**

(30) Priorität: **30.06.2004 DE 102004031485**

(43) Veröffentlichungstag der Anmeldung:
**04.01.2006 Patentblatt 2006/01**

(73) Patentinhaber: **KUKA Roboter GmbH**
**86165 Augsburg (DE)**

(72) Erfinder: **Weiss, Martin, Dr.**
**86459 Margertshausen (DE)**

(74) Vertreter: **Schlotter, Alexander Carolus Paul et al**
**Wallinger Ricker Schlotter Tostmann**
**Patent- und Rechtsanwälte**
**Zweibrückenstrasse 5-7**
**80331 München (DE)**

(56) Entgegenhaltungen:
WO-A-93/01703  DE-A1- 19 751 955
US-B1- 6 757 587  US-B2- 6 526 332

- **HOPLER R ET AL: "A versatile C++ toolbox for model based, real time control systems of robotic manipulators" PROCEEDINGS OF THE 2001 IEEE/RSJ INTERNATIONAL CONFERENCE ON INTELLIGENT ROBOTS AND SYSTEMS. (IROS 2001). MAUI, HAWAII, OCT. 29 - NOV. 3, 2001; [IEEE/RSJ INTERNATIONAL CONFERENCE ON INTELLIGENT ROBOTS AND SYSTEMS], NEW YORK, NY : IEEE, US, Bd. 4, 29. Oktober 2001 (2001-10-29), Seiten 2208-2214, XP010573442 ISBN: 978-0-7803-6612-1**
- **HONG K-S ET AL: "A PC-based open robot control system: PC-ORC" ROBOTICS AND COMPUTER INTEGRATED MANUFACTURING, ELSEVIER SCIENCE PUBLISHERS BV., BARKING, GB, Bd. 17, Nr. 4, 1. August 2001 (2001-08-01), Seiten 355-365, XP004245851 ISSN: 0736-5845**
- **HEUER K ET AL: "Open architecture robot control based on Matlab/Simulink and a dSPACE real time system" PROCEEDINGS OF SPIE - THE INTERNATIONAL SOCIETY FOR OPTICAL ENGINEERING - INTELLIGENT MANUFACTURING 2004 SPIE US, [Online] Bd. 5263, 29. Oktober 2003 (2003-10-29), Seiten 1-9, XP002554764 Gefunden im Internet: URL:http://spiedl.aip.org/getpdf/servlet/G etPDFServlet?filetype=pdf&id=PSISDG0052630 00001000001000001&idtype=cvips&prog=norma l > [gefunden am 2009-11-10]**
- **FORD W E: "What is an open architecture robot controller?" INTELLIGENT CONTROL, 1994., PROCEEDINGS OF THE 1994 IEEE INTERNATIONAL SYMPOSIUM ON COLUMBUS, OH, USA 16-18 AUG. 1994, NEW YORK, NY, USA, IEEE, 16. August 1994 (1994-08-16), Seiten 27-32, XP010126497 ISBN: 978-0-7803-1990-5**

EP 1 612 004 B1

**Beschreibung**

Die Erfindung betrifft ein Verfahren und eine Vorrichtung zum Steuern eines Handhabungsgerätes, wie eines Mehrachs-Industrieroboters, mittels einer Steuerungseinrichtung mit einem Steuerungskern zum Ausführen von Steuerungsprozessen für das Handhabungsgerät.

Zur Steuerung von automatisierten Handhabungsgeräten, wie Mehrachs-Industrierobotern, Portalrobotern (in einem Portalgestell angeordnete und bewegliche Roboter), SCARA-Robotern (Selecitve Compliance Assembly Robot Arm - ein selektiv in einer Ebene ausgleichender Roboter, Schwenkarm-Roboter) oder Palettierrobotern, kommen heutzutage regelmäßig programmierbare rechnergestützte, d.h. programmtechnisch eingerichtete Steuerungsvorrichtungen zum Einsatz. Ein zentraler Bestandteil derartiger Robotersteuerungen sind Prozeduren zur Umwandlung kinematischer und dynamischer Größen und Systemzustände des Roboters zum Zwecke einer Verwendung für unterschiedliche Steuerungsaufgaben. Dies beinhaltet beispielsweise die Position, Orientierung, Geschwindigkeit und Beschleunigung (des Endeffektors oder der Achsen), Kräfte und Momente in den Getriebelagern, Soll-Ströme, die kinetische Energie des Systems sowie mechanische Spannungen auf der Grundlage von bekannten Maschinendaten. Diese Daten umfassen beispielsweise Geometriebeschreibungen des Handhabungsgeräts, wie Längen oder Winkel, Massen, Massenschwerpunkte und Trägheiten sowie Materialparameter, wie Steifigkeiten, Reibungs-, und Ausdehnungskoeffizienten oder dergleichen. Weitere Einflussgrößen können von Sensoren gelieferte Messwerte sein, wie Temperatur, Dehnungen und Verspannungen.

Die Umwandlung der vorstehend beispielhaft genannten Größen und Systemzustände kann dabei in verschiedene Richtungen erfolgen, wobei zusätzlich zu unterscheiden ist, ob Ist-oder Sollwerte als Eingangsgrößen verwendet werden. Beispielhaft seien hier erwähnt:

- die Bestimmung des Soll-Stroms für eine Roboterachse aus deren Soll-Position unter Berücksichtigung des Einflusses der Schwerkraft, der Soll-Geschwindigkeit, Soll-Beschleunigung und des Massenträgheitsmoments unter Berücksichtigung einer Soll-Temperatur;

- die Bestimmung eines geschätzten Getriebemoments aus der Ist-Geschwindigkeit, Ist-Beschleunigung und des Massenträgheitsmoments der Achse unter Berücksichtigung einer Ist-Temperatur; und

- die Bestimmung der kartesischen Bahnabweichung aus achsweisen Soll-Positionen und Schleppfehlern, d.h. Unterschieden zwischen Soll- und Ist-Position.

Nach ihrem grundlegenden Aufbau werden die kinematischen Strukturen von Handhabungsgeräten, die sogenannten "Kinematiken", in verschiedene Klassen unterteilt, wobei die Unterteilung im Wesentlichen bestimmt ist durch die Anzahl der Achsen im System, die Art der Achsen (Linearachsen, Drehachsen, Kugelgelenke, ...), die Verbindung der Achsen durch Bauteile des Roboters sowie die relative Lage der Achsen zueinander. Hinsichtlich der Achsen-Verbindung ist ein entscheidender Gesichtspunkt, ob sich geschlossene Strukturen ("Schleifen") ergeben oder ob eine offene kinematische Kette vorliegt. Die relative Achslage ist im wesentlichen gekennzeichnet durch Orthogonalitätsbeziehungen und die Schnittpunkte der Achsen.

Der verwendete Begriff einer "Klasse von Kinematiken" bedeutet, dass für die angesprochenen mathematischen Prozeduren, die in einer zugehörigen Steuerung ablaufen sollen, nur die vorstehend genannte Ausgestaltung und Anordnung der Achsen entscheidend für die mathematisch-physikalische Behandlung ist, während konkrete geometrische Abmessungen von beispielsweise Robotern unterschiedlicher Größen für unterschiedliche Aufgaben und Lasten lediglich als Parameter in der entsprechenden Beschreibung auftauchen, ohne die Verfahren an sich in ihrer Komplexität zu beeinflussen.

Typischerweise sind Robotersteuerungen heute in der Lage, Handhabungsgeräte aus nur einer oder weniger derartigen Klassen (weniger als 5) von Kinematiken zu betreiben.

Die eingangs erwähnten, für die Steuerung eines Handhabungsgeräts erforderlichen Prozeduren umfassen im Wesentlichen:

1. Transformationen zwischen Achswinkeln und kartesischen Positionen und Orientierungen sowie zwischen den Ableitungen dieser Größen, d.h. Umrechnung von Achsgeschwindigkeiten und -beschleunigungen in kartesische Geschwindigkeiten bzw. Geschwindigkeiten der Umorientierung mit den entsprechenden Beschleunigungen und umgekehrt.

Diese sogenannten Vorwärts- und Rückwärtstransformationen sind die Grundlage für kartesisches Verfahren; ohne derartige Prozeduren ist keine kartesische Bahnprogrammierung des Roboters möglich. In der Regel wird hier ein kinematisches Modell des Roboter verwendet, d.h. eine geometrische Beschreibung ohne Berücksichtigung von Massen, Trägheiten sowie den resultierenden Kräften und Momenten.

2. Bestimmung von Kräften, Momenten und kinetischer Energie; ohne derartige Prozeduren ist keine zeitoptimale Bewegungsprogrammierung und keine basierte Regelung möglich.

Grundlage für die Berechnung ist in der Regel ein Starrkörpermodell (siehe unter anderem: Craig, Intruduction to Robotics: Mechanics and Control, Addison Wesley, 1986), wobei Reibung mitberücksichtigt werden kann. In Erweiterung können auch Elastizitäten in den Antriebssträngen mitberücksichtigt werden. Ein solches Robotermodell wird auch als Dynamikmodell bezeichnet und ist Grundlage für die Bewegungsplanung.

3. Berechnung von Funktionen der kinematischen und dynamischen Größen als Hilfsgrößen, z.B. der Trägheit um eine Roboterachse als wichtige Größe für eine Achsregelung.

Größen wie die Trägheit variieren bei einem Roboter in Abhängigkeit von weiteren Parametern, wie beispielsweise der Nutzlast und Achswinkeln von in einer kinematisch offenen Kette nachfolgenden Achsen. Derartige Funktionswerte finden beispielsweise für modellbasierte Regelung Verwendung.

4. Berechnung von partiellen Ableitungen der o.g. Funktionen.
Die partiellen Ableitungen werden benötigt

- zur Umrechnung von achsweise und kartesisch gegebenen Größen mit Hilfe der Jakobi-Matrix;

- zur Identifikation von Systemparametern, z.B. nach dem Least-Squares-Prinzip. Derartige Identifikationsverfahren verwenden partielle Ableitungen in Form der Jakobi-Matrix. Eine Sensitivitätsanalyse der Parameter erfordert die Hesse-Matrix, d.h. die partiellen Ableitungen zweiter Ordnung. Derartige Verfahren werden jedoch in der Regel außerhalb der Robotersteuerung eingesetzt (siehe: Kovacs, Rechnergestützte symbolische Roboterkinematik, Technische Universität Berlin, 1991).

- als zusätzliche Größen im Regelkreis.

5. Kombinationen der Prozeduren 1 bis 3, z.B. kinematische Berechnung (Prozedur 1) unter Berücksichtigung der durch die Massen und Schwerkraft bedingten Durchbiegung der Struktur (Prozedur 2).

Eine Robotersteuerung bearbeitet Bewegungsbefehle aus verschiedenen Quellen, wie Programmbewegungen, Handverfahrbewegungen, Interruptbewegungen. Bewegungsplanung bezeichnete denjenigen Teil eines Compilers oder Interpreters, der aus den Bewegungsbefehlen einer Roboter-Programmiersprache (die üblicherweise die Bewegungsarten Punkt-zu-Punkt, Linearbewegung, Kreisbewegung, Spline-Bewegung enthält, welche wiederum jeweils durch den Zielpunkt der Bewegung charakterisiert sind) die geometrische Bahn des Werkzeugs anhand gewisser Kriterien berechnet, evtl. einschließlich des Geschwindigkeitsverlaufs auf der Bahn. Dieser vorab erzeugte "Plan" für den Bewegungsverlauf wird danach "interpoliert", d.h. Stützpunkte auf der geplanten Bahn werden - meist in festen Zeitabständen - berechnet und - als Achswinkel - über die Antriebsschnittstelle an die Antriebe weitergegeben. In der Planung wird z.B. geprüft, ob die Achswinkel im zulässigen Bereich liegen (Aufruf der Rückwärtstransformation) und/oder es wird eine zeitoptimale Bahn geplant (Aufruf des inversen Dynamikmodells).

In der Interpolation werden zu jedem kartesischen Stützpunkt die zugehörigen Achswinkel berechnet (Aufruf der Rückwärtstransformation).

In der Antriebsschnittstelle werden abhängig von aktueller Position, Geschwindigkeit, Beschleunigung und Last Vorsteuermomente berechnet. In der Regelung werden gegebenenfalls verschiedene Ableitungen berechnet.

Während in der klassischen Kaskadenregelung von Antrieben kein Modell der Straße verwendet wird, daher partielle Ableitungen nicht erforderlich sind, wird bei modernen nichtlinearen modellbasierten Regelungsverfahren, wie "Feedback Linearization" (A. Isidori, Non-linear Control Systems, Springer Verlag, 1989) oder "Backstepping" (Kokotovic: Non-linear and Adaptive Control Design, Wiley Interscience, 1995) ein nichtlineares Zustandsraummodell $d/dt \, x = f(x,u)$ in ein lineares Modell transformiert, für das dann Standardverfahren der linearen Regelungstheorie verwendet werden. Die Transformation beinhaltet Ableitungen. Dieser Ansatz der "Non-linear Model Predictive Control" löst in jedem Regeltakt ein Optimierungsproblem über einen gewissen Zeithorizont (Jan Maciejowski: Predictive Control with Constraints, Prentice Hall, 2001). Für die Lösung von Minimierungsproblemen wird üblicherweise eine Nullstelle des Gradienten, der ebenfalls durch partielle Ableitungen gekennzeichnet ist, bestimmt.

Die obigen Prozeduren lassen sich rechnerisch unter Rückgriff auf bestimmte Standardalgorithmen analytischer und/oder numerischer Art durchführen. Im Folgenden werden zur mathematischen Formulierung der genannten Prozeduren die folgenden Bezeichnungen verwendet:

n          Anzahl Achsen oder Gelenke

$\theta_i$, i=1,...,n          Gelenkkoordinaten (Winkel bei Drehgelenken, Längen bei Schubgelenken; skalar)

(x,y,z,a,b,c,S)    kartesische Position (S: Konfigurationsinformationen; siehe unten)

Die vorstehend genannten (Transformations-)Prozeduren 1 bis 5 können bedingt durch die interne Struktur der jeweils eingesetzten Robotersteuerung in unterschiedlicher Weise zur Verfügung gestellt werden, da sie in ihren Eingangs-und Ausgangsgrößen nicht eindeutig festgelegt sind. Dies sei im Folgenden am Beispiel der Rückwärtsrechnung bei einer Kinematik mit offener Kette, d.h. der Bestimmung von Gelenkkoordinaten bei einer gegebenen kartesischen Position des Roboterwerkzeugs (Endeffektor) dargestellt:

- Rückwärtsrechnung bei einem Sechsarm-Knickroboter, d.h. Bestimmung von Achswinkeln zu einer gegebenen kartesischen Position: $(x,y,z,a,b,c,S) \rightarrow (\theta_1,...,\theta_m)$.
  Hierbei beschreiben die Eingangsvariablen x,y,z,a,b,c die Sollposition und -Orientierung, beispielsweise über Roll-Pitch-Yaw-Winkel, wohingegen die zusätzliche Variable S (typischerweise eine als Bit-Folge interpretierte ganze Zahl) eine Information dahingehend enthält, welche von den verschiedenen Lösungen der Berechnung ausgewählt werden soll. Hierbei wird implizit angenommen, dass eine eindeutige Lösung existiert. Die zusätzlichen Informationen können beispielsweise in Form von zulässigen Winkelbereichen vorgegeben werden.
- Rückwärtsrechnung mit mengenwertigem Ergebnis:

$$(x,y,z,a,b,c) \rightarrow \{N, \theta_{i,j}\}, \quad j=1,...,N.$$

Durch diese Art von Rückwärtsrechnung wird die Anzahl der möglichen Lösungen N zusammen mit den jeweiligen Lösungen als Ergebnis geliefert. Die Zusatzinformation S ist hier nicht erforderlich. Es wird implizit angenommen, dass endlich viele Lösungen existieren.

- Rückwärtsrechnung mit Ergebnis möglichst nahe an einer gegebenen Position: $(x,y,z,a,b,c,\varphi_i) \rightarrow (\theta_1,...,\theta_n)$.
  Zu einer gegebenen kartesischen Position (x,y,z,a,b,c) und gegebenen Achswinkeln ($\varphi_i$) wird diejenige Lösung ermittelt, deren euklidischer Abstand minimal wird, d.h. $\|\varphi_i - \theta_i\|$ = min.

Bei vorbekannten Verfahren und Vorrichtungen der eingangs genannten Art werden eine oder mehrere dieser verschiedenen Varianten vom Hersteller der Steuerung als bevorzugte Prozedur(en) ausgewählt und implementiert. Kinematische Daten (Längen, Winkel), dynamische Daten (Massen, Trägheiten) und ggf. weitere physikalische Parameter werden in entsprechenden zugehörigen Maschinenbeschreibungen als Parameter für die Prozeduren 1 bis 5 abgelegt.

Bei der Implementierung ergibt sich aus mathematischen Gründen eine fundamentale Einschränkung: Es ist nicht möglich, ein allgemeines mathematisches Verfahren zur Bestimmung aller Prozeduren 1 bis 5 aus einer gegebenen geometrischen und dynamischen Beschreibung eines Roboters anzugeben. Einige prinzipielle mathematische Probleme hierbei sind:

- Die Rückwärtsrechnung bei Kinematiken mit offener Kette kann über die sogenannte tan/2-Substituion auf die Bestimmung der Nullstellen von Polynomen zurückgeführt werden, wobei jedoch für allgemeine Polynome ab dem fünften Grad keine analytische Lösung existiert (van der Waerden, Algebra I/II, Springer, 1993). Somit ist für beliebige Achsenschiefstände und Achsabstände keine analytische Lösung der Rückwärtsrechnung möglich. Außerdem steigt der Rechenaufwand für die analytische Lösung - sofern eine solche existiert - auch bei Verwendung modernster Methoden stark an (Kovacs, a.a.O.). Dabei ist eine analytische Lösung einer numerischen vorzuziehen, da numerische Verfahren beispielsweise nicht in der Lage sind, die Anzahl möglicher Lösungen zu bestimmen .

- Die Vorwärtsrechnung bei Kinematiken mit offener Kette ist trivial, da hierbei lediglich Matrizen multipliziert werden müssen (Craig, a.a.O.; Paul, Robot Manipulators, MIT Press, 1983). Bei Kinematiken mit kinematischen Schleifen, z.B. Hexapoden, ist in der Regel keine analytische Vorwärtsrechnung bekannt, so dass hier das vorstehend zur Rückwärtsrechnung Gesagte entsprechend gilt. Die Rückwärtsrechnung bei Schleifen-Kinematiken ist dagegen oft einfach analytisch zu bestimmen (Möller, Ein Verfahren zur automatischen Analyse mehrschleifiger räumlicher Mechanismen, Dissertation, Universität Stuttgart, 1992).

- Die Berechnung der "inversen Dynamik" ist bei offenen kinematischen Ketten über den sogenannten Euler-Newton-Algorithmus möglich, sofern die Achskoordinaten bekannt sind. Bei geschlossenen kinematischen Ketten gibt es wie im Falle der Rückwärtsrechnung von Kinematiken mit offener Kette keine allgemeine Lösung.

- Sofern bei einer bestimmten Prozedur keine analytische Berechnungsmethode bekannt ist, existiert regelmäßig

**EP 1 612 004 B1**

auch keine analytische Berechnungsmöglichkeit für die partiellen Ableitungen (siehe oben).

Dennoch liegt es im Bestreben eines Steuerungsherstellers, möglichst viele Arten von Kinematiken mit einer gegebenen Steuerung betreiben zu können. Dies trifft insbesondere dann zu, wenn dieser Hersteller sowohl Steuerungen als auch Kinematiken anbietet. Andererseits soll eine Steuerung auch mit Kinematiken von Fremdherstellern betrieben werden können, die selbst keine eigenen Steuerungen anbieten. Hierzu boten sich für einen Steuerungshersteller bislang zwei Möglichkeiten: Einerseits die Implementierung aller Prozeduren 1 bis 5 für eine beschränkte Anzahl von Kinematiken, andererseits der Einsatz (iterativer) numerische Verfahren in Kombination mit analytischen Lösungen. Als nachteilig ist dabei insbesondere anzusehen, dass für jede Kinematik alle Prozeduren 1 bis 5 implementiert werden müssen, so dass neben dem Entwicklungs- und Pflegeaufwand auch der Umfang der Steuerung mit der Anzahl der zu unterstützenden Kinematiken beliebig anwächst. Sollen also neuentwickelte Kinematiken oder Fremdkinematiken eines anderen Herstellers mit einer gegebenen Steuerung betrieben werden, so ist dies nur dann möglich, wenn die entsprechenden Kinematik in eine der bereits implementierten Kinematikklassen fällt bzw. mit deren Prozeduren berechenbar ist.

Der Einsatz (iterativer) numerischer Verfahren in Kombination mit analytischen Lösungen sei im Folgenden am Zusammenspiel von Vorwärts- und Rückwärtstransformationen bei einer Kinematik mit offener Kette erläutert. Für die Vorwärtsrechnung ist lediglich eine Matrizenmultiplikation erforderlich, wobei sich die Matrixeinträge aus den Gelenkvariablen und kinematischen Beschreibungen (beispielsweise den Denavit-Hartenberg-Parametern) sowie aus den Koordinatensystemen für Werkzeug, Roboterbasis usw. zusammensetzen. Mathematisch ist dabei die Position des Endeffektors und dessen Orientierung P als Funktion der Achsvariablen $\theta_i$ gegeben: $P = f(\theta_i)$.

Die notwendigen Parameter können in einem Datensatz zur Maschinenbeschreibung abgelegt sein. Die Rücktransformation ist nach den vorstehenden Ausführungen im Allgemeinen nicht analytisch lösbar, so dass statt dessen ein Verfahren zur numerischen Lösung von Gleichungssystemen der obigen Form für ein gegebenes P benutzt wird (Münch, Universelle Koordinatentransformation für Industrie-Roboter, www.maschinenbau.hs-magdeburg.de/personal/bargfrede/fue_robotics.html)

Bei dieser Vorgehensweise ist insbesondere als nachteilig anzusehen, dass es nicht möglich ist, die Prozeduren 1 bis 5 allgemein gültig zu implementieren, wobei insbesondere die mangelnde Lösungs-Mehrdeutigkeit, sowie das für Echtzeit-Anwendungen kritische Konvergenzverhalten und die oft unzureichende Genauigkeit gegen den Einsatz der notwendigerweise Anwendung findenden numerischen Verfahren sprechen.

Heutzutage ist ein Kinematik-Hersteller von den Software-Entwicklungszyklen des Steuerungsherstellers abhängig: Selbst wenn der Kinematikhersteller in der Lage ist, die Prozeduren 1 bis 5 rechnerisch umzusetzen, besteht für ihn keine Möglichkeit, diese mit einer bestehenden Steuerungssoftware zu nutzen. Darüber hinaus besteht seitens der Kinematikhersteller regelmäßig der Wunsch, die Prozeduren 1 bis 5 selbst zu entwickeln, um nicht gezwungen zu sein, dem Steuerungshersteller betriebliche Kenntnisse offen legen zu müssen. Dies ist bei den Verfahren und der Vorrichtungen der eingangs genannten Art jedoch nicht möglich, da in diesem Fall umgekehrt der Steuerungshersteller dem Kinematik-hersteller Detailinformationen hinsichtlich der Steuerung offen legen müsste.

Beispielsweise aus Hopler R., et al. "A versatile C++ toolbox for model based, real time control systems of robotic manipulators" und Hong K-S, et al. "A PC-based open robot control system PC-ORC" ist es bekannt, ein Robotermodell zu re-konfigurieren. Aus der US 6,757,587 B1 und der DE 197 51 955 A1 ist es bekannt, aus mehreren, von Anfang an vorgesehenen Modellen eines für eine Steuerung eines Roboters auszuwählen.

Aus der US 6,526,33S B2 ist eine Roboterregelung für mobile Roboter mit hardwareunabhängiger und hardwareabhängiger Software bekannt, wobei eine mit einer Hardwarekonfiguration kompatible hardwareabhängige Software ausgewählt wird und über eine Schnittstelle mit der hardwareunabhängigen Software kommuniziert.

Der Erfindung liegt die Aufgabe zugrunde, unter Vermeidung der angesprochenen Probleme ein Verfahren und eine Vorrichtung der eingangs genannten Art dahingehend weiterzuentwickeln, dass bei Bedarf, d.h. insbesondere bei Verwendung der Steuerung mit einer ursprünglich nicht vorgesehenen, neuen Kinematik, eine Kompatibilität erreichbar ist, ohne die Steuerung selbst zu verändern. Ferner sollen Anbieter von Fremdkinematiken in die Lage versetzt werden, die Steuerung eines Steuerungsherstellers ohne dessen Hilfe nutzen zu können, um so von externen Entwicklungszyklen unabhängig zu werden.

Die Aufgabe wird ein Verfahren gemäß Anspruch 1 bzw. eine Vorrichtung gemäß Anspruch 6 gelöst.

Kern der erfindungsgemäßen Lösung ist demnach eine Modularisierung der Steuerungsarchitektur, um die eingangs genannten Transformationsprozeduren 1 bis 5 logisch vom Rest der Steuerung abzutrennen und so einen Mechanismus zu schaffen, der eine externe, kinematik-spezifische Implementierung eines Teils oder aller der Prozeduren 1 bis 5 ggf. zusammen mit entsprechenden Modellen und/oder Spezialalgorithmen in einem sogenannten "Modellmodul", erlaubt. Diese Vorgehensweise beruht auf der Tatsache, dass die genannten Prozeduren als mathematische Funktionen ohne direkte Abhängigkeit von der restlichen Steuerung aufgefasst werden können; sie werden erfindungsgemäß als reine Schnittstellenspezifikation in der Steuerung betrachtet (vorgegebene Ein-und Ausgabegrößen), die mit den restlichen Steuerungsfunktionen kombinierbar sind: Für denjenigen Teil einer Robotersteuerung, der über die vorstehend genannten Prozeduren 1 bis 5 hinausgeht, müssen die internen Abläufe dieser Prozeduren nicht bekannt sein. Im Gegensatz zu anderen Funktionalitäten einer Robotersteuerung, die durch quasi-gleichzeitige Ausführung und Interaktion mit anderen Steuerungskomponenten gekennzeichnet sind (sogenannten Multi-Tasking), sind die genannten Prozeduren als Funktionen in streng mathematischem Sinn anzusehen, d.h. bestimmte Eingangsgrößen werden nach einem definierten Algorithmus behandelt und liefern bestimmte Ergebnisgrößen. Demzufolge können die genannten Prozeduren als eine Art "black box" aufgefasst werden, für die lediglich eine Schnittstelle zum Austausch der Eingangs- und Ausgangsgrößen definiert sein muss.

Die Erfindung sieht entsprechend vor, in der Steuerung eine vorzugsweise programmtechnisch ausgebildete Schnittstelle einzufügen, die die zumindest logisch, d.h. hinsichtlich ihrer Einbindung in die Programmstruktur von der restlichen Steuerung getrennten Prozeduren 1 bis 5 an die restliche Steuerung anbindet. Auf diese Weise können einige oder alle dieser Prozeduren unter optimalem Rückgriff auf die im Steuerungskern vorhandenen Standardalgorithmen numerischer und/oder analytischer Art gelöst werden, wobei kinematik-spezifische Verfahren im Zuge einer besonders bevorzugten Ausgestaltung des erfindungsgemäßen Verfahrens durch die Modellmodule, die als Datei in einer externen Speichereinrichtung, ggf. einem löschbaren Nurlesespeicher (ROM, EPROM), vorliegen können, zu einem bestehenden Steuerungskern hinzugebunden werden, beispielsweise durch einen in herkömmlichen Robotersteuerungen regelmäßig vorhandenen Compiler oder Bindemechanismus. Es ist dabei grundsätzlich möglich, die Prozeduren 1 bis 5 für diejenigen Kinematiken, die für eine Steuerung standardmäßig vorgesehen sind, entweder intern (dauerhaft) zu implementieren; alternativ kann vorgesehen sein, auch diese Prozeduren grundsätzlich über externe Modellmodule anzubinden.

Das bzw. die Modellmodul(e) können im Wesentlichen ausführbaren Objekt-Code oder alternativ kompilierbaren ProgrammCode beinhalten. Für das Binden zum Steuerungskern kommt sowohl dynamisches als auch statisches Linken in Betracht.

Nach einer Weiterbildung des erfindungsgemäßen Verfahrens ist vorgesehen, dass die Kompatibilität der im Steuerungskern vorhandenen Standardalgorithmen und einer im Modellmodul angegebenen kinematischen Struktur überprüft wird. Zu diesem Zweck weist eine erfindungsgemäße Vorrichtung vorzugsweise eine Prüfungseinrichtung zum Überprüfen der Kompatibilität der Standardalgorithmen und einer im Modellmodul angegebenen kinematischen Struktur auf. Die Prüfungseinrichtung kann sich alternativ entweder im Steuerungskern oder im Modellmodul befinden.

Weitere Eigenschaften und Vorteile der Erfindung ergeben sich aus der nachfolgenden Beschreibung von Ausführungsbeispielen anhand der Zeichnung. Es zeigt:

Fig. 1a    ein Blockschaltbild der Struktur einer erfindungsgemäßen Robotersteuerung;

Fig. 1b    eine der Fig. 1a entsprechende Darstellung bei Aufruf der im Steuerungssystem implementierten Vorwärtsrechnung und Dynamikmodell über das Modellmodul sowie eine im Modellmodul implementierte Rückwärtsrechnung;

Fig. 1c    eine den vorangehenden Figuren entsprechende Darstellung bei Auswertung des Dynamikmodells für ein im Kern der Steuerung vorhandenes Kinematikmodell;

Fig. 2    anhand eines Blockschaltbilds die Struktur einer erfindungsgemäßen Robotersteuerung;

Fig. 3a    in einer schematischen Darstellung die Speicherstruktur einer Variante der erfindungsgemäßen Robotersteuerung mit einer Schnittstelle zum dynamischen oder statischen Linken eines Modellmoduls zum Steuerungskern, bevor das Modellmodul gebunden wurde, und

Fig. 3b    eine schematische Darstellung der Speicherstruktur gemäß der Fig. 3a, nachdem das Modellmodul gebunden wurde.

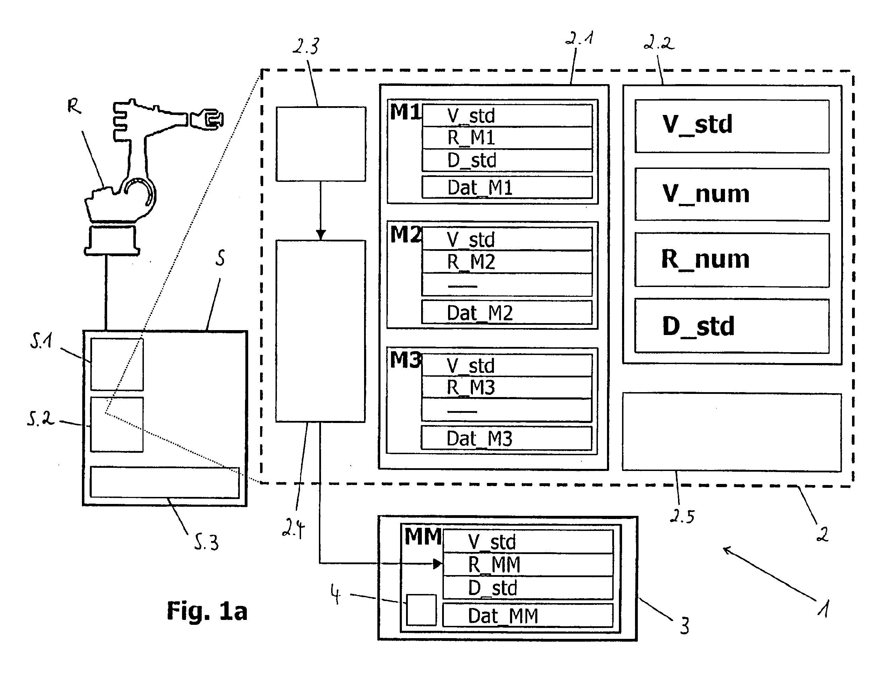

Die Fig. 1a zeigt einen typischen Mehrachs-Indstrieroboter R nebst zugehöriger Steuerungseinrichtung S, bei der darüber hinaus noch eine Prozessoreinheit S.1, ein Arbeitsspeicher S.2 sowie ein Massenspeicher S.3 als regelmäßig vorhandene Bestandteile einer derartigen Steuerungseinrichtung S dargestellt sind. Weiterhin zeigt die Fig. 1a anhand eines Blockschaltbilds eine erfindungsgemäße Vorrichtung 1 zum Steuern eines Handhabungsgeräts, wie des genannten Mehrachs-Industrieroboters R, mit einem Satz kinematischer Modelle M1-M3 im Kern 2 der Robotersteuerung sowie einem Modellmodul MM bei aufgerufener Rückwärtsrechnung.

Die Vorrichtung 1 weist zunächst einen Steuerungskern 2 auf, der vorzugsweise in programmtechnischer Form, d.h. auf der Grundlage geeigneter Software auf einem Steuerungsrechner (der Steuereinheit S.1) für das Handhabungsgerät R eingerichtet ist. Dies geschieht regelmäßig durch Laden einer entsprechenden Software-Anwendung in den Arbeitsspeicher S.2 des Steuerungsrechners.

Der Steuerungskern 2 umfasst Speicherbereiche 2.1, 2.2, in denen Kinematikmodelle M1-M3 für die mit der erfindungsgemäßen Vorrichtung 1 bzw. dem Steuerungskern 2 betreibbaren Klassen von Handhabungsgeräten bzw.

Standardalgorithmen V_std, V_num, R_num, D_std zur rechnerischen Umsetzung der entsprechenden Prozeduren (s.o.) gespeichert sind.

Bei den Kinematikmodellen M1-M3 kann es sich beispielsweise um Modelle für einen Fünf- und Sechsarm-Industrieroboter (M1), einen SCARA-Roboter (M2) und einen Portal-Roboter (M3) handeln. Jedes der Modelle M1-M3 beinhaltet jeweils geeignete Prozeduren zur Vorwärtsrechnung (V_...), Rückwärtsrechnung (R_...), ggf. ein Dynamikmodell (D_...) sowie Maschinendaten (Dat_...), entweder in Form einer eigenen Implementierung, beispielsweise innerhalb des Speicherbereichs 2.1, oder in Form eines Adressverweises auf die entsprechenden Standardalgorithmen (..._std) innerhalb des Speicherbereichs 2.2. So wird beispielsweise für das Modell M1 hinsichtlich der Vorwärts- und der Rückwärtsrechnung jeweils auf den Standardalgorithmus V_std bzw. R_std verwiesen. Für die Modell M2, M3 ist jeweils kein Dynamikmodell vorgesehen.

Weiterhin umfasst der Steuerungskern 2 eine Planungs- und Aufrufinstanz 2.3 für durchzuführende Steuerungsaufgaben sowie eine (logische) Schnittstelle 2.4, die den eigentlichen Kern der vorliegenden Erfindung darstellt, auf die weiter unten noch detailliert eingegangen wird.

Zusätzlich enthält der Steuerungskern 2 noch eine Auswahl-und Überprüfungseinrichtung 2.5, auf deren Funktion ebenfalls noch eingegangen wird. Die Auswahl- und Überprüfungseinrichtung 2.5 kann alternativ auch zweigeteilt ausgebildet und/oder außerhalb des Steuerungskerns 2 (im Modellmodul MM; s.u.) enthalten sein.

Getrennt von dem vorstehend beschriebenen Steuerungskern 2 weist die erfindungsgemäße Vorrichtung 1 eine externe Speichereinrichtung 3 auf, in der beim Gegenstand der Fig. 1a ein im Wesentlichen analog zu den bereits beschriebenen Kinematikmodellen M1-M3 aufgebautes Modellmodul MM abgelegt ist. Bei der Speichereinrichtung 3 handelt es sich vorzugsweise um einen ROM- oder einen EPROM-Speicher oder eine Datei auf einer Festplatte, Diskette etc.

Mit Hilfe des Modellmoduls MM lassen sich erfindungsgemäß Spezialkinematiken darstellen, zu deren Betrieb der Steuerungskern 2 als solcher nicht vorgesehen ist, beispielsweise da dem Steuerungshersteller eine entsprechende Kinematik (noch) nicht bekannt war. Das Modellmodul MM wird erfindungsgemäß vorzugsweise durch einen regelmäßig im Steuerungskern 2 vorhandenen Linker (nicht gezeigt) zum Steuerungskern 2 gebunden und enthält - wie auch die im Steuerungskern enthaltenen kinematischen Modelle M1-M3 eigene Transformationsprozeduren (..._MM) und (Adress-)Verweise auf Standardalgorithmen (..._std) im Steuerungskern 2. Zusätzlich umfasst das Modellmodul MM ein global definiertes Software-Objekt 4, auf das weiter unten noch eingegangen wird.

Aus Gründen der Übersichtlichkeit sind sowohl für die Modelle M1-M3 als auch für das Modellmodul MM von den in der Beschreibungseinleitung erwähnten Prozeduren 1 bis 5 jeweils nur Vorwärts- und Rückwärtsrechnung (Prozedur 1) und das Dynamikmodell (Prozedur 2) dargestellt.

Die Beschreibung einer Roboterkinematik im Modellmodul MM kann auf unterschiedliche Arten erfolgen. Im Folgenden werden mögliche Standardimplementierungen sowie deren Auswirkung auf die Implementierung der eingangs genannten Transformationsprozeduren und der erfindungsgemäßen (logischen) Schnittstelle 2.4 dargestellt. Eine entsprechende zugeordnete physikalische Schnittstelle zum Andocken der Speichereinrichtung 3 mit Modellmodul MM an die (physikalische) Steuerung ist selbstverständlich ebenfalls vorhanden, beispielsweise in Form eines CD- oder DVD-ROM-Laufwerks oder dergleichen, bei der hier gewählten logischen Darstellungsweise jedoch nicht gezeigt.

Eine offene kinematische Kette lässt sich beispielsweise durch Spezifikation der Denavit-Hartenberg-Paramter und des Achstyps (Linearachse/rotatorische Achse) in einer ASCII-Datei beschreiben. Die entsprechenden Angaben, die erfindungsgemäß als Maschinendaten Dat_MM abgelegt werden, lautet entsprechend (Craig, a.a.O.; Paul, a.a.O.):

```
dh1 = {a 1000 cm, α 90°, d 20 cm, θ 0°}

dh2 = {a -500 cm, α -90°, d 100 cm, θ 0°}

...
```

Standardalgorithmen, wie die Vorwärtsrechnung für offene kinematische Ketten V_std eines Industrieroboters mit Drehgelenken, sind im Steuerungskern 2 implementiert, beispielsweise in Form einfacher Matrizenmultiplikationen:

$$\text{Tool} = A_1 \, \text{RotZ}(\theta_1) \, A_2 \, \text{RotZ}(\theta_2) \, A_3 \, \text{RotZ}(\theta_3) \, \ldots \, A_n \text{RotZ}(\theta_n) A_{n+1}.$$

Dabei bezeichnet $A_i$ die konstanten Matrizen zur Beschreibung der Geometrie einzelner Bauteile der kinematischen Kette und $\text{Rotz}(\theta_i)$ eine Drehung um die z-Achse des jeweiligen Gelenks (sofern nur Drehachsen vorhanden sind).

Alternativ kann der Aufbau eines Roboters in Form einer graphischen Darstellung gegeben sein, dessen Knoten den Bauteilen des Roboters entsprechen. Darüber hinaus sind den einzelnen Bauteilen Eigenschaften wie Ausdehnung, Masse usw. zugeordnet. Alternativ kann auf eine Beschreibung der Kinematik vollständig verzichtet werden, soweit die Parameter der Modellbeschreibung, wie Armlängen oder dergleichen, als feste Konstanten in der Steuerungssoftware, d.h. im Steuerungskern 2 implementiert sind.

Die in Fig. 1a gezeigte Schnittstelle 2.4 zum (An-)Binden von Modellmodulen MM ist im Zuge einer bevorzugten Ausgestaltung in der Erfindung eine programmtechnische Einrichtung und in einer gebräuchlichen Programmiersprache, wie C++, entworfen. Hierbei stellt der Steuerungshersteller eine Schnittstellenbeschreibung in Form einer sogenannten Header-Datei zur Verfügung (Dateierweiterung: ".h;" hier verwendeter Name: "ModellInterface.h"). Diese Datei enthält eine Beschreibung der Dateitypen und Funktionssignaturen (Argumente, Parameter und Ergebnisse) sowie die Namen von im Steuerungskern 2 vorhandenen Adressvariablen, die zum Binden der erfindungsgemäßen Schnittstelle 2.4 verwendet werden. Unter "Binden" versteht man das Verbinden eines vom Compiler erzeugten Object-Codes mit Bibliotheken oder dergleichen zum Erzeugen eines ablauffähigen Programms (wird auch als Linken bezeichnet).

Der folgenden Programmcode zeigt ein typisches Beispiel einer Header-Datei mit Unterstützung von Vorwärts- und Rückwärtstransformation:

```
const int MaxAxis = 12;
struct DenavitHartenberg {
    double a, alpha, d, theta;
};
struct AxisConfiguration {
    double axis [MaxAxis]
}
struct Frame {



    double x, y, z, a, b, c;
};

typedef int StatusType;
typedef int (*ForwardTransformationType)(AxisConfi-
guration &Axis, Frame &CartesianPosition,
StatusType Status);
typedef int (*BackwardTransformationType)(const
Frame &CartesianPosition, const StatusType Status,
AxisConfiguration &Axis);

extern BackwardTransformation AdresseForwardTransfor-
mation;
extern ForwardTransformation AdresseBackwardTrans-
formation;

extern int StandardForwardTransformation(int NumAxis,
AxisConfiguration &Angles, const DenavitHarten-
berg DHParameter[], Frame &CartesianPosition,
StatusType & Status);
```

Im Steuerungskern 2 der erfindungsgemäßen Vorrichtung 1 sind weiterhin Hilfsprozeduren zum Aufruf der Transformationsprozeduren implementiert. Zusätzlich finden sich dort Variablen mit Adressen, mit deren Hilfe die Schnittstelle 2.4 in der Lage ist, die für ein bestimmtes Modell M1-M3, MM erforderlichen Prozeduren aufzurufen. Im o.g. Beispielcode sind dies "AdresseForwardTransformation" und "AdresseBackwardTransformation" für die Aufrufe der Vorwärts- bzw. Rückwärtstransformation. Ein möglicher Schnittstellen-Code unter Einbindung der vorstehend genannten Header-Datei lautet wie folgt:

```
#include "ModellInterface.h"

extern ForwardTransformation AdresseForwardTransforma-
tion;
extern BackwardTransformation AdresseBackwardTransforma-
tion;

int CallBackwardTransformation(const Frame
&CartesianPosition, const StatusType Status, AxisCon-
figuration &Axis)
{
    if (UseModellInterface)
```

```
{
return (*AdresseBackwardTransformation) (Cartesian-
Position, Status, Axis)
}
else
{
        switch (ModelType)
        {
                case Standard6Axis:
                        return BackwardTransformationStan-
                                dard6Axis (CartesianPosition,
                                Status, Axis);
                break;
                case Scara:
                        return BackwardTransformationScara
                                (CartesianPosition, Status, Axis);
                break;
                case Portal:
                        return BackwardTransformationPortal
                                (CartesianPosition, Status, Axis);
                break;
        }
    }
}


int StandardForwardTransformation (int NumAxis, AxisCon-
figuration &Angles, const DenavitHartenberg DHParame
ter[], Frame &CartesianPositon, StatusType & Status)
{
    Matrix44 Position; // frame as 4 x 4 matrix

    // Position = identity matrix
    for (int Axis = 0; Axis < NumAxis; ++Axis)
    {
            // convert DHParameter[Axis] to matrix M;
            // build variable Z matrix depending on An-
                gles[Axis]
            Position == Position * M * Z;
    }

    // convert Position to Frame CartesianPosition
    Frame = . . . ;
}
```

Im Modellmodul MM selbst sind die speziellen, auf die zugrunde liegende Kinematik zugeschnittenen Prozeduren (Fig. 1a: R_MM) implementiert. Dazu kommen, wie bereits gesagt, die entsprechenden Maschinendaten Dat_MM sowie ein globales Software-Objekt 4, d.h. ein Objekt, das nicht nur innerhalb eines Unterprogramms zur Verfügung steht, dessen Anweisungen bei der Initialisierung des Modellmoduls MM ausgeführt werden (enthält Konstruktionen und allgemeine Initialisierungsbefehle).

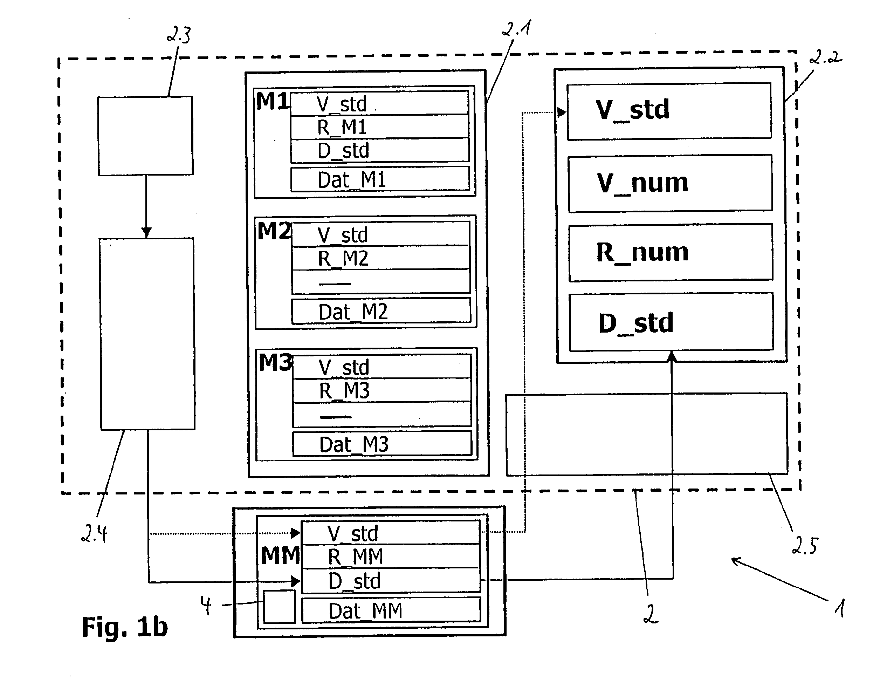

In dem folgenden Beispiel ruft die Vorwärtsrechnung den Standardalgorithmus aus dem Steuerungskern 2 auf; dies ist in der Fig. 1b mit gestrichelten Linien dargestellt. Die Rückwärtsrechnung ist gesondert im Modellmodul MM implementiert, was im Programmcode nur angedeutet und in der Fig. 1a mittels der durchgezogenen Linie von der Schnittstelle 2.4 zur Prozedur R_MM des Modellmoduls MM zeichnerisch dargestellt ist. Maschinendaten Dat_MM sind als Liste von Denavit-Hartenberg-Parametern im Modellmodul MM abgelegt. Das Software-Objekt "SpecialModel" weist in seinem Konstruktor die Adressen derjenigen Funktionen den in der Header-Datei deklarierten Variablen zu, die den Prozeduren des Modellmoduls (mit dem Spezialmodell, "SpecialModel") entsprechen:

```
#include "ModelInterface.h"

const int NumAxisSpecial = 6;
DenavitHartenberg DHParameterSpecial = {
      {10, 20, 30, 0},
      {20, 30, 40, 0},
      . . .
}

int ForwardTransformationSpecial(AxisConfiguration
&Axis, const Frame &CartesianPosition, const StatusType
Status)
{
      StandardForwardTransformation(NumAxisSpecial,
      Angles, DHParameterSpecial, CartesianPosition,
      Status);
}

int BackwardTransformation(const Frame &CartesianPosi-
tion, const StatusType Status, AxisConfiguration &Axis)
{
      // ;
}




class InitSpecialModell {
Public:
   InitSpecialModell() {
         AdresseForwardTransformation = ForwardTransforma-
   tionSpecial;
         AdresseBackwardTransformation = BackwardTransfor-
   mationSpecial;
   }
}

InitSpecialModell SpecialModell;
```

Die Schnittstelle 2.4 kann erfindungsgemäß in unterschiedlichen Ausgestaltungen realisiert werden, die jeweils von einer konkreten Ausgestaltung des Steuerungskerns 2 abhängen:

**Variante 1**

Diese Variante betrifft die Implementierung einer Schnittstelle 2.4 zum dynamischen oder statischen Linken des Modellmoduls MM zum Steuerungskern 2. Dabei werden die Algorithmen für die Prozeduren 1 bis 5 als Funktionen in einer Programmier-Hochsprache oder in Maschinensprache (Assembler) implementiert, woraufhin die Anweisungen ggf. durch einen Compiler oder Assembler in ein maschinenlesbares Object-Format (Object-Code) übersetzt werden. Der Steuerungskern 2 prüft dann beim Start des Steuerungssystems beispielsweise in der Planungs- und Aufrufinstanz 2.3, die für den Ablauf eines Steuerungsprogramms verantwortlich ist, ob eine solche Object-Datei mit einem Modellmodul vorhanden ist und bindet diese ggf. zum Steuerungskern. Das Modellmodul muss in diesem Zusammenhang dem Steuerungskern die Adressen der zur Ausführung seiner Prozeduren jeweils erforderlichen Funktionen mitteilen, die entweder im Modellmodul MM selbst oder im Steuerungskern liegen können, wobei erfindungsgemäß durch die Überprüfungseinrichtung 2.5 eine zusätzliche Überprüfung der Kompatibilität von Standardalgorithmen des Steuerungskerns 2 und Anforderungen des Modellmoduls MM durchgeführt wird, beispielsweise betreffend die Anzahl erforderlicher bzw. übergebener Parameter und/oder eines Ausgabeformats. Bei Fehlern kann außerdem eine entsprechende Meldung an den Steuerungskern angegeben werden.

Dementsprechend umfasst eine bevorzugte Ausgestaltung der Erfindung, wie sie bereits vorstehend anhand der Fig. 1a einleitend erläutert wurde, zwei unabhängige Komponenten, nämlich den Steuerungskern 2 und wenigstens ein Modellmodul MM. Der Steuerungskern enthält dabei regelmäßig einen Mechanismus zum dynamischen Binden (Linken) von Tabellen mit symbolischen Namen, sogenannten Symboltabellen, der üblicherweise bereits vom Betriebssystem zur Verfügung gestellt wird, z.B. von dem in Robotersteuerungen regelmäßig verwendeten Echtzeitbetriebssystem VxWorks. Weiterhin enthalten sowohl Steuerungskern 2 als auch das Modellmodul MM einerseits ausführbare Maschinenbefehle in Form von Funktionen oder Prozeduren, die speziell im Bereich des Betriebssystems VxWorks durch Übersetzen von C- oder C++-Programmen entstanden sind. Andererseits existiert jeweils eine Symboltabelle, die die Einsprungadressen für die Funktionen bzw. Prozeduren und die Lage von Variablen im Speicher angibt. Hierbei handelt es sich um eine gängige Form einer Symboltabelle, die ebenfalls von dem Echtzeitbetriebssystem VxWorks bereitgestellt wird.

Im Rahmen der vorliegenden Erfindung enthält die Symboltabelle des Steuerungskerns 2 insbesondere eine Adressvariable der Form "AdresseFunktionX" (siehe vorstehenden Programmcode). Dabei steht "FunktionX" für eine der Prozeduren 1 bis 5, d.h. für jede der Prozeduren bzw. seine spezielle Ausprägung im Rahmen eines Kinematikmodells mit den entsprechenden möglichen Parametern und Rückgabewerten existiert eine eigene Adressvariable. Im vorstehenden Beispiel sind dies die Bezeichnungen "AdresseForwardTransformation" "AdresseBackwardTransformation". Diese Adressvariablen sind innerhalb des Steuerungsprogramms global bekannt und enthalten die Speicheradresse der Rechenvorschrift zum Bezeichner "FunktionX" im Speicher.

Weiterhin enthält der Steuerungskern 2 unter anderem eine Routine mit der Bezeichnung "StandardFunktionX", im Beispiel "StandardForwardTransformation". Diese stellt eine (im Steuerungskern 2 angesiedelte) Standardimplementierung der entsprechenden Prozedur, wobei es möglich ist, anhand einer weiteren Variablen zur Kennzeichnung des Kinematiktyps eine bestimmte aus einer Mehrzahl von im Steuerungskern 2 vorhandenen Prozeduren anzusprechen. Es ist auch möglich, dass die genannte Standardimplementierung im Steuerungskern 2 nur formal vorhanden ist, so dass bei ihrem Aufruf eine Fehlermeldung generiert wird. Auf diese Weise lässt sich effektiv erzwingen, dass die entsprechende Prozedur entweder implementiert oder nie verwendet wird. Alternativ ist es auch möglich, dass gar keine Standardimplementierung vorhanden ist, wie im obigen Beispiel im Falle der "StandardBackwardTransformation".

Das Modellmodul MM enthält seinerseits ausführbare Maschinenbefehle für Funktionen vom Typ "ModulfunktionX", im Beispiel die Prozeduren "ForwardTransformationSpecial" und "BackwardTransformationSpecial". Weiterhin umfasst das Modellmodul eine Initialisierungsroutine in Form von ausführbaren Maschinenbefehlen, die vom dynamischen Linker des Steuerungskerns 2 nach dem Binden aufgerufen wird. Im Rahmen einer bevorzugten Ausgestaltung der Erfindung wird, wie in den obigen Programmabschnitten dargestellt, in der Programmiersprache C++ ein globales Objekt ("SpecialModell") angelegt, dessen Konstruktor nach dem Link aufgerufen wird, bevor irgendeine Funktion - typischerweise "main()" bei einem Programm bestehend aus nur einem Modul - aufgerufen wird. Bei einem nachgeladenen Modul wird typischerweise nach dem nachladen gar keine Funktion aufgerufen, d.h. es werden nur Konstruktoren globaler Objekte aufgerufen. Dadurch wird bei dem beschriebenen Verfahren sichergestellt, dass vor dem Aufruf einer Funktion aus dem Modellmodul bereits alle Variablen ihre korrekten Werte besitzen. Da dem Ersteller des Modellmoduls der Name "AdresseFunk-tionX" bekannt ist, lässt sich in der Initialisierungsroutine eine Anweisung vorgeben, die der Variablen "Adresse-FunktionX" die Speicheradresse der "ModulfunktionX" zuweist.

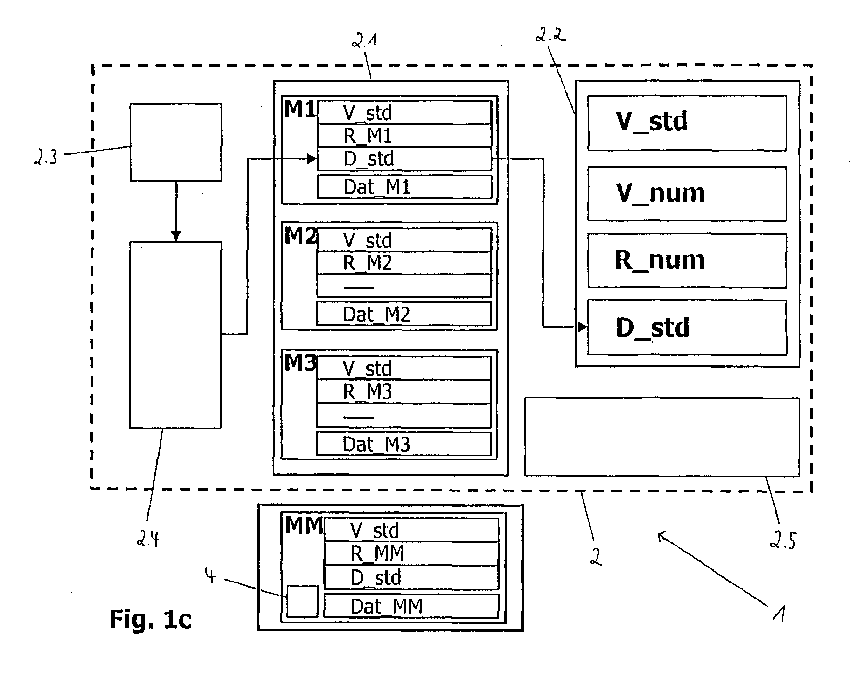

Bei Initialisierung des Gesamtsystems wird zunächst anhand einer Variablen "UseModelInterface" geprüft, ob eine im Steuerungskern vorhandene (Transformations-)Prozedur verwendet werden soll oder ob an der Schnittstelle eine externe Prozedur in einem Modellmodul vorgegeben wird. Soll die Schnittstelle nicht verwendet werden, wird die Adresse einer im Steuerungskern vorhandenen Standardprozedur in der Variablen "AdresseFunktionX" eingetragen bzw. im Rahmen einer Fallunterscheidung direkt in einen Fall verzweigt, in dem die im Steuerungskern 2 implementierten Standardprozeduren aufgerufen werden (vgl. Fig. 1c).

Falls das Modellmodul MM über die Schnittstelle 2.4 verwendet werden soll, wird es mittels des dynamischen Bindemechanismus in den Speicher des Steuerungsrechners (nicht gezeigt) geladen und zum Steuerungskern 2 gebunden. Kennzeichnend für den dynamischen Bindemechanismus ist, dass die symbolischen Namen im geladenen Modellmodul MM ersetzt werden, beispielsweise durch die Speicheradresse. Dadurch kann das Modellmodul MM auf die Variable "AdresseFunktionX" des Steuerungskerns 2 zugreifen. Dies ermöglicht es dem Modellmodul, Informationen über den vorab festgelegten gemeinsam genutzten Namen "AdresseFunktionX" an den Steuerungskern 2 weiterzugeben. Nach dem Laden und Binden des Modellmoduls MM wird die Initialisierungsroutine (siehe oben) aufgerufen, wodurch die Speicheradresse der mittels der Schnittstelle vorgesehenen Prozedur "ModulfunktionX" in der Variablen "Adresse-FunktionX" abgelegt wird. In obigen Beispielen sind dies die Zuweisungen "AdresseForwardTransformation = TransformationSpecial; AdresseBackwardTransformation = BackwardTransformationSpecial". Weiterhin werden in der Initialisierungsroutine ggf. die Modellparameter als Maschinendaten aus Beschreibungsdateien oder -tabellen (Dat_MM) geladen.

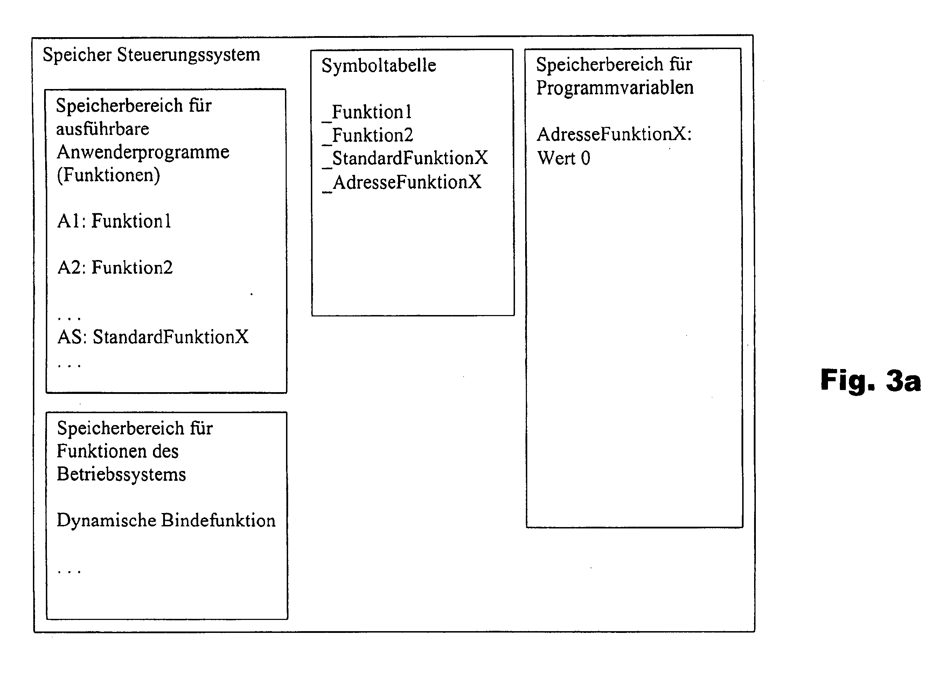

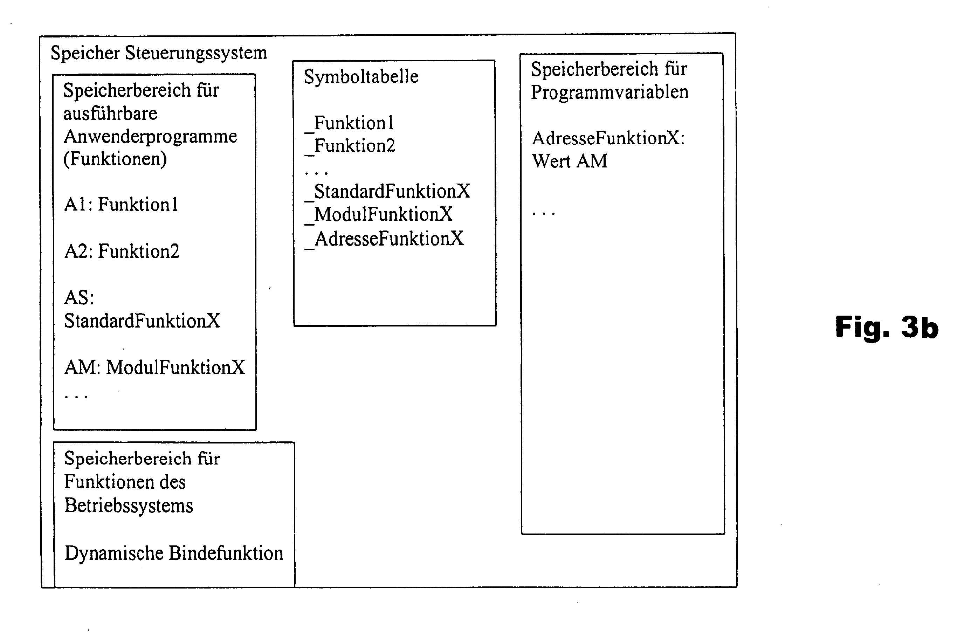

Nach erfolgter Initialisierung (vgl. Fig. 3a, b) des Steuerungskerns 2 steht folglich in der Variablen "Adresse-FunktionX":

- die Speicheradresse des Standardalgorithmus "StandardfunktionX", falls die Schnittstelle nicht zum Binden eines Modellmoduls verwendet wird;

- die Speicheradresse der Funktion "ModulfunktionX", falls die Schnittstelle zum Binden eines Modellmoduls verwendet wird.

Der vorstehend beschriebene Ablauf wird als "dynamisches Binden" bezeichnet, da er bei jedem Start der Steuerung abläuft. Alternativ kann das Ergebnis eines wie oben beschriebenen Bindeablaufs (statisch) gespeichert werden und lässt sich in der Folge als neuer Steuerungskern definieren. Dies bezeichnet man als sogenanntes "statisches Binden".

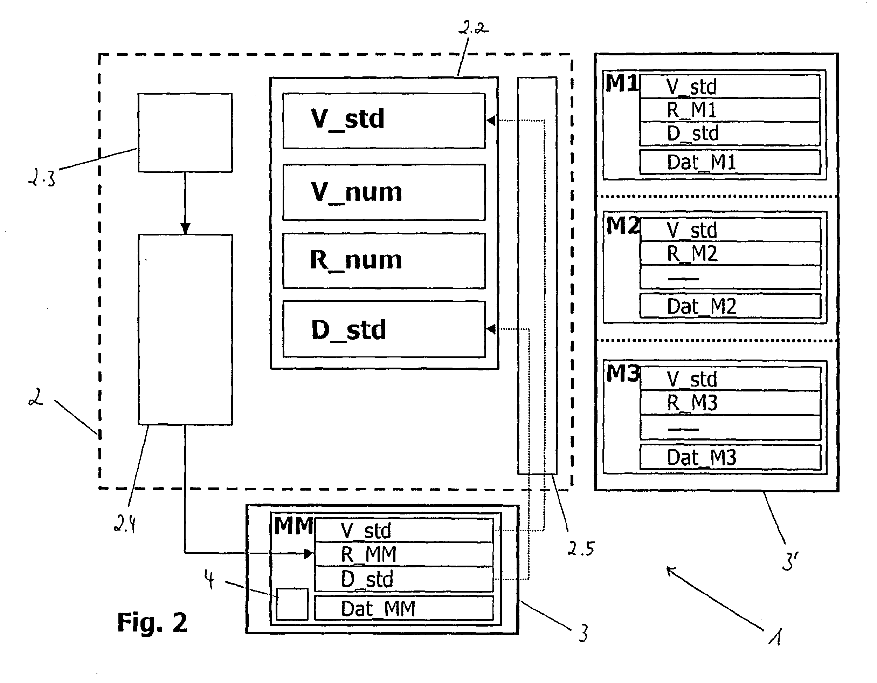

Nach den Vorangehenden erfolgt die Berechnung der Vorwärtstransformation bei aktivierter Modellschnittstelle 2.4 folgendermaßen (vergleiche Fig. 1b, Fig. 2; jeweils gestrichelte Linien): Um "FunktionX" auszuwerten, führt der Steuerungskern 2 die Befehle aus, die an der in "AdresseFunktionX" eingetragenen Speicheradresse abgelegt sind. Wird die Schnittstelle 2.4 nicht verwendet, d.h. ist kein Modellmodul MM an den Steuerungskern 2 gebunden, entspricht die in "AdresseFunktionX" gespeicherte Adresse der Speicheradresse der Standardfunktion "StandardfunktionX". Anderenfalls entspricht sie der Speicheradresse der "ModulfunktionX".

Die vorstehend beschriebenen Vorgänge sind detailliert in den Fig. 3a, b dargestellt, die in schematischer Weise die Speicherstruktur einer Variante der erfindungsgemäßen Robotersteuerung mit einer Schnittstelle zum dynamischen oder statischen Linken eines Modellmoduls zum Steuerungskern zeigen, bevor bzw. nachdem ein Modellmodul gebunden werden.

Andere Programmiersprachen als C oder C++ bzw. andere Betriebssysteme bieten eventuell leicht abgewandelte Mechanismen, um analog zum Vorstehenden zusätzliche Funktionen zu integrieren. Die Programmiersprachen LISP oder Small-Talk, wobei Erstere für Roboter-Anwendungen im Bereich der künstlichen Intelligenz beliebt ist, werden in der Regel nicht compiliert, so dass interpretierbare Anweisungen als einfache Textdateien jederzeit zum System hinzugefügt werden können. Im Rahmen der Erfindung ist dabei entscheidend, dass sowohl im Steuerungskern als auch im Modellmodul ein gemeinsamer Bezeichner verwendet wird, hier: "AdresseFunktionX".

Die erfindungsgemäße Vorrichtung nach Fig. 1c unterscheidet sich von den bislang erläuterten Ausgestaltungen dadurch, dass kein Modellmodul MM konfiguriert ist, d.h. das Modellmodul MM ist nicht an den Steuerungskern 2 gebunden. Die Schnittstelle 2.4 ruft gemäß Fig. 1c das Dynamikmodell D_std für ein im Steuerungskern 2 enthaltenes Kinematikmodell M1 auf, das einen Standardalgorithmus D_std des Steuerungskerns 2 verwendet.

Die Fig. 2 zeigt die Struktur einer erfindungsgemäßen Robotersteuerung mit der erfindungsgemäßen Schnittstelle 2.4, bei der alle kinematischen Modelle in Form von Modellmodulen implementiert sind, d.h. auch die Modelle M1-M3 sind extern bezüglich des Steuerungskerns 2 angeordnet, der lediglich Standardalgorithmen V_std, V_nun, R_nun, D_std als Bausteine für die (externen) Kinematikmodelle zur Verfügung stellt. Der durchgezogene Pfeil zeigt den Aufruf für die Rückwärtstransformation, die gestrichelten Linien die Aufrufe für die anderen Prozeduren (Vorwärtsrechnung und Dynamikmodell). Bei dieser Ausgestaltung werden Spezialkinematiken (Fremdkinematiken; Modellmodul MM) und Standardkinematiken (Module M1-M3) völlig gleichberechtigt behandelt. Wie das Modellmodul MM enthalten auch die Module M1-M³ gemäß der in Fig. 2 gezeigten Ausgestaltung ein globales Objekt 4, das jedoch aus Gründen der Übersichtlichkeit nicht explizit dargestellt ist. Die Module M1-M3 können einzeln oder gemeinsam mit entsprechender logischer Trennung (fette gestrichelte Linien in Fig. 2) mittels einer weiteren externen Speichereinrichtung 3' zur Verfügung gestellt werden. Im Unterschied zu Variante 1, wo der ausführbare Objekt-Code bereits vom Steuerungshersteller vor Auslieferung der Steuerung aus dem Quell-Code erzeugt wurde, wird bei Variante 2 ein Form von Quelltext als Modellmodul betrachtet, und erst beim Nachladen des Moduls in ausführbaren Objekt-Code übersetzt, bzw. jedes mal beim Aufruf einer Funktion des Modellmoduls interpretiert. Als Quelltext kann auch eine Kombination von zu interpretierendem bzw. kompilierendem Code und eine textuelle Beschreibung der Maschinendaten einer Roboterkinematik aufgefasst werden.

## Variante 2

Alternativ kann die Beschreibung der Prozeduren 1 bis 5 durch mathematische Formeln und Gleichungen erfolgen, die von einem Interpreter oder Compiler im Steuerungskern 2 ausgewertet werden. Dies erfordert die Implementierung eines Interpreters oder Compilers zur Auswertung von mathematischen Formeln oder Gleichungen einschließlich Variablen, die etwa die Robotergeometrie beschreiben. Allerdings sind derartige Interpreter oder Compiler in modernen Robotersteuerungen regelmäßig enthalten, da diese im Kontext ihrer Programmiersprache die Auswertung komplexer mathematischer Ausdrücke gestatten. Auf diese Weise kann z.B. die Rückwärtsrechnung einer Drehachsen-Kinematik, d.h. Bestimmung des Drehwinkels aus zwei kartesischen Positionskoordinaten x, y durch Auswertung der Arkustangensfunktion (arctan) erfolgen.

Sowohl Variante 1 als auch Variante 2 können mit einer beliebigen Modellbeschreibung (ASCII-Datei, Verbindungsgraphie der mechanischen Komponenten, ...) kombiniert werden.

**Bezugszeichenliste**

| | |
|---|---|
| 1 | Vorrichtung |
| 2 | Steuerungskern |
| 2.1, 2.2 | Speicherbereich |
| 2.3 | Planungs- und Aufrufinstanz |
| 2.4 | Schnittstelle |
| 2.5 | Auswahl- und Überprüfungseinrichtung |
| 3 | Speichereinrichtung |
| 4 | globales Software-Objekt |
| M1-M3 | Kinematikmodell |
| MM | Modellmodul |

**Patentansprüche**

1. Verfahren zum Steuern eines Handhabungsgerätes, wie eines Mehrachs-Industrieroboters (R), mittels einer Steuerungseinrichtung (S), mit einem Steuerungskern (2) zum Ausführen von Steuerungsprozessen für das Handhabungsgerät, **dadurch gekennzeichnet, dass** durch eine Schnittstellenfunktion überprüft wird, ob im Steuerungskern (2) enthaltene Kinematikmodelle (M1, M2, M3) mit Transformationsprozeduren (R_M1, R_M2, R_M3) oder zusätzliche, an der Schnittstelle vorgebbare Kinematikmodelle mit Transformationsprozeduren (R_MM) für bewegungsrelevante Größen des Handhabungsgerätes als Modellmodule (MM) verwendet werden, wobei zusätzliche Kinematikmodule Verweise auf Standardalgorithmen (V_std) im Steuerungskern aufweisen.

2. Verfahren nach Anspruch 1, **dadurch gekennzeichnet, dass** die Modellmodule als Dateien in einer externen Speichereinrichtung vorliegen und zu dem Steuerungskern gebunden werden.

3. Verfahren nach Anspruch 1 oder 2, **dadurch gekennzeichnet, dass** die Modellmodule dynamisch zu dem Steuerungskern gebunden werden.

4. Verfahren nach Anspruch 1 oder 2, **dadurch gekennzeichnet, dass** die Modellmodule statisch zu dem Steuerungskern gebunden werden.

5. Verfahren nach einem der Ansprüche 1 bis 2, **dadurch gekennzeichnet, dass** die Kompatibilität der Standardalgorithmen und einer im Modellmodul angegebenen kinematischen Struktur überprüft wird.

6. Vorrichtung zum Steuern eines Handhabungsgeräts, wie eines Mehrachs-Industrieroboters (R), mit einem Steuerungskern (2), der zum Ausführen von Steuerungsprozessen für das Handhabungsgerät eingerichtet ist, **gekennzeichnet durch** eine Schnittstelle (2.4), an der zusätzlich zu im Steuerungskern (2) enthaltenen Kinematikmodellen (M1, M2, M3) mit Transformationsprozeduren (R_M1, R_M2, R_M3) zusätzliche Kinematikmodelle mit Transformationsprozeduren (R_MM) für bewegungsrelevante Größen des Handhabungsgeräts als Modellmodule (MM) vorgebbar sind, wobei zusätzliche Kinematikmodule Verweise auf Standardalgorithmen (V_std) im Steuerungskern aufweisen.

7. Vorrichtung nach Anspruch 6, **dadurch gekennzeichnet, dass** die Schnittstelle (2.4) programmtechnisch ausgebildet ist.

**8.** Vorrichtung nach Anspruch 6 oder 7, **gekennzeichnet durch** eine Prüfungseinrichtung (2.5) zum Überprüfen der Kompatibilität der Standardalgorithmen (V_std, V_num, R_num, D_std) und einer im Modellmodul (MM) angegebenen kinematischen Struktur.

**9.** Vorrichtung nach einem der Ansprüche 6 bis 8, **dadurch gekennzeichnet, dass** die Modellmodule (MM) in einer externen Speichereinrichtung (3) ablegbar und zu dem Steuerungskern (2) bindbar sind.

**10.** Vorrichtung nach einem der Ansprüche 6 bis 9, **dadurch gekennzeichnet, dass** die Modellmodule (MM) dynamisch zum Steuerungskern (2) bindbar sind.

**11.** Vorrichtung nach einem der Ansprüche 6 bis 9, **dadurch gekennzeichnet, dass** die Modellmodule (MM) statisch zum Steuerungskern (2) bindbar sind.

**12.** Vorrichtung nach einem der Ansprüche 6 bis 11, **dadurch gekennzeichnet, dass** die Modellmodule (MM) im wesentlichen ausführbaren Objekt-Code enthalten.

**13.** Vorrichtung nach einem der Ansprüche 6 bis 11, **dadurch gekennzeichnet, dass** die Modellmodule (MM) im wesentlichen kompilierbaren Programmcode enthalten.

## Claims

**1.** A process for controlling a handling device, such as a multi-axial industrial robot (R), by a control means (S) with a control core (2) for realizing of control processes for the handling device, **characterized in that** by an interface function it is checked whether kinematic models (M1, M2, M3) with transformation procedures (R_M1, R_M2, R_M3), which are contained in the control core (2), or additional kinematic models with transformation procedures (R_MM) for motion-relevant quantities of the handling device, which can be set at the interface, are used as model modules (MM), wherein additional kinematic modules comprise references to standard algorithms (V_std) in the control core.

**2.** A process according to claim 1, **characterized in that** the model modules are present as data files in an external memory means and are linked to the control core.

**3.** A process according to one of the claims 1 or 2, **characterized in that** the model modules are linked dynamically to the control core.

**4.** A process according to one of the claims 1 or 2, **characterized in that** the model modules are linked statically to the control core.

**5.** A process according to one of the claims 1 to 2, **characterized in that** the compatibility of the standard algorithms and a kinematic structure indicated in the model module is checked.

**6.** A device for controlling a handling device, such as a multi-axial industrial robot (R), with a control core (2) that is arranged to carry out control processes for the handling device, **characterized by** an interface (2.4) at which, in addition to kinematic modules (M1, M2, M3) with transformation procedures (R_M1, R_M2, R_M3) contained in the control core, additional kinematic models with transformation procedures (R_MM) for motion-relevant quantities of the handling device can be set as model modules (MM), wherein additional kinematic modules comprise references to standard algorithms (V_std) in the control core.

**7.** A device according to claim 6, **characterized in that** the interface (2.4) is a program-based interface.

**8.** A device according to one of the claims 6 or 7, **characterized by** checking means (2.5) for checking the compatibility of the standard algorithms (V_std, V_num, R_num, D_std) and a kinematic structure indicated in the model module (MM).

**9.** A device according to one of the claims 6 to 8, **characterized in that** the model modules (MM) can be stored in an external memory means (3) and can be linked to the control core (2).

**10.** A device according to one of the claims 6 to 9, **characterized in that** the model modules (MM) can be linked dynamically to the control core (2).

**11.** A device according to one of the claims 6 to 9, **characterized in that** the model modules (MM) can be linked statically to the control core (2).

**12.** A device according to one of the claims 6 to 11, **characterized in that** the model modules (MM) essentially contain executable object code.

**13.** A device according to one of the claims 6 to 11, **characterized in that** the model modules (MM) essentially contain compilable program code.


**Revendications**

**1.** Procédé de commande d'un manipulateur, tel qu'un robot industriel multiaxial (R), au moyen d'un dispositif de commande (S), pourvu d'un noyau de commande (2) destiné à exécuter des processus de commande pour le manipulateur, **caractérisé en ce qu'**une fonction d'interface contrôle si des modèles cinématiques (M1, M2, M3) contenus dans le noyau de commande (2) associés à des procédures de transformation (R_M1, R_M2, R_M3), ou des modèles cinématiques supplémentaires pouvant être préfinis au niveau de l'interface et associés à des procédures de transformation (R_MM) pour des grandeurs, liées au mouvement, du manipulateur sont utilisés comme modules de modèle (MM), des modules cinématiques supplémentaires présentant des renvois aux algorithmes standard (V-std).

**2.** Procédé selon la revendication 1, **caractérisé en ce que** les modules de modèle se présentent sous forme de fichiers dans un dispositif mémoire externe et sont liés pour obtenir le noyau de commande.

**3.** Procédé selon la revendication 1 ou 2, **caractérisé en ce que** les modules de modèle sont liés de manière dynamique pour obtenir le noyau de commande.

**4.** Procédé selon la revendication 1 ou 2, **caractérisé en ce que** les modules de modèle sont liés de manière statique pour obtenir le noyau de commande.

**5.** Procédé selon l'une quelconque des revendications 1 à 2, **caractérisé en ce que** la compatibilité des algorithmes standard et d'une structure cinématique indiquée dans le module de modèle est contrôlée.

**6.** Dispositif de commande d'un manipulateur, tel qu'un robot industriel multiaxial (R), pourvu d'un noyau de commande (2) conçu pour exécuter des processus de commande pour le manipulateur, **caractérisé par** une interface (2.4) au niveau de laquelle, en plus des modèles cinématiques (M1, M2, M3) contenus dans le noyau de commande (2) et associés à des procédures de transformation (R_M1, R_M2, R_M3), des modèles cinématiques supplémentaires associés à des procédures de transformation (R_MM), pour des grandeurs, liées au mouvement, du manipulateur peuvent être prédéfinis comme modules de modèle (MM), des modules cinématiques supplémentaires présentant des renvois aux algorithmes standard (V-std).

**7.** Dispositif selon la revendication 6, **caractérisé en ce que** l'interface (2.4) est conçue par programmation.

**8.** Dispositif selon la revendication 6 ou 7, **caractérisé par** un dispositif de contrôle (2.5) destiné à contrôler la compatibilité des algorithmes standard (V_std, V_num, R_num, D_std) et d'une structure cinématique indiquée dans le module de modèle (MM).

**9.** Dispositif selon l'une des revendications 6 à 8, **caractérisé en ce que** les modules de modèle (MM) peuvent être mis en mémoire dans un dispositif mémoire externe (3) et liés pour obtenir le noyau de commande (2).

**10.** Dispositif selon l'une des revendications 6 à 9, **caractérisé en ce que** les modules de modèle (MM) peuvent être liés de manière dynamique pour obtenir le noyau de commande (2).

**11.** Dispositif selon l'une des revendications 6 à 9, **caractérisé en ce que** les modules de modèle (MM) peuvent être liés de manière statique pour obtenir le noyau de commande (2).

**12.** Dispositif selon l'une des revendications 6 à 11, **caractérisé en ce que** les modules de modèle (MM) contiennent des codes-objets essentiellement exécutables.

**13.** Dispositif selon l'une des revendications 6 à 11, **caractérisé en ce que** les modules de modèle (MM) contiennent des codes de programme essentiellement compilables.

Fig. 1a

Fig. 1b

EP 1 612 004 B1

**Fig. 1c**

2.1

2.2

2.3

2.4

2.5

2

1

4

M1
| V_std |
| R_M1 |
| D_std |
| Dat_M1 |

M2
| V_std |
| R_M2 |
| —— |
| Dat_M2 |

M3
| V_std |
| R_M3 |
| —— |
| Dat_M3 |

MM
| V_std |
| R_MM |
| D_std |
| Dat_MM |

| **V_std** |
| **V_num** |
| **R_num** |
| **D_std** |

**Fig. 2**

**Speicher Steuerungssystem**

| Speicherbereich für ausführbare Anwenderprogramme (Funktionen) |
| --- |
| A1: Funktion1 |
| A2: Funktion2 |
| . . . |
| AS: StandardFunktionX |
| . . . |

| Speicherbereich für Funktionen des Betriebssystems |
| --- |
| Dynamische Bindefunktion |
| . . . |

| Symboltabelle |
| --- |
| _Funktion1 |
| _Funktion2 |
| _StandardFunktionX |
| _AdresseFunktionX |

| Speicherbereich für Programmvariablen |
| --- |
| AdresseFunktionX: Wert 0 |

**Fig. 3a**

**Fig. 3b**

Speicher Steuerungssystem

Speicherbereich für ausführbare Anwenderprogramme (Funktionen)

A1: Funktion1

A2: Funktion2

AS: StandardFunktionX

AM: ModulFunktionX

...

Symboltabelle

_Funktion1
_Funktion2
...
_StandardFunktionX
_ModulFunktionX
_AdresseFunktionX

Speicherbereich für Programmvariablen

AdresseFunktionX: Wert AM

...

Speicherbereich für Funktionen des Betriebssystems

Dynamische Bindefunktion

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6757587 B1
- DE 19751955 A1

- US 652633S B2


**In der Beschreibung aufgeführte Nicht-Patentliteratur**

- **CRAIG.** Intruduction to Robotics: Mechanics and Control. Addison Wesley, 1986
- **KOVACS.** *Rechnergestützte symbolische Roboterkinematik,* 1991
- **A. ISIDORI.** Non-linear Control Systems. Springer Verlag, 1989
- **KOKOTOVIC.** Non-linear and Adaptive Control Design. Wiley Interscience, 1995
- **JAN MACIEJOWSKI.** Predictive Control with Constraints. Prentice Hall, 2001
- **VAN DER WAERDEN.** Algebra I/II. Springer, 1993

- **CRAIG, A.A.O. ; PAUL, ROBOT.** Manipulators. MIT Press, 1983
- **MÖLLER.** Ein Verfahren zur automatischen Analyse mehrschleifiger räumlicher Mechanismen. *Dissertation,* 1992
- **HOPLER R. et al.** *A versatile C++ toolbox for model based, real time control systems of robotic manipulators*
- **HONG K-S et al.** *A PC-based open robot control system PC-ORC*